# EUROPEAN PATENT APPLICATION

(11) **EP 2 497 443 A2**
(43) Date of publication of application: **12.09.2012**
(21) Application number: 10828445.6
(22) Date of filing: 04.10.2010
(51) Int. Cl.: A61C 17/14, A47K 5/18, A47D 13/00, A61C 17/02

(54) **MOBILE SINK FOR BRUSHING TEETH FOR CHILDREN**

(30) Priority: 06.11.2009 KR 20090106765; 01.10.2010 KR 20100095714
(71) Applicant: Song, Kwang So, Daegu 702-853 (KR)
(72) Inventor: Song, Kwang So, Daegu 702-853 (KR)
(74) Representative: Cross, James Peter Archibald
(86) International application number: PCT/KR2010/006751
(87) International publication number: WO 2011/055910

(57) **Abstract**

Disclosed is an infant mobile tooth-brushing basin. The infant mobile tooth-brushing basin includes a water supply container and water collecting container received in a main body, a pumping device installed to the top of the main body to pump water in the water supply container, a drain bowl indented in an upper surface of the main body and connected to the water collecting container in which water used upon tooth-brushing is collected, a funnel connected to the main body via a flexible pipe that is connected to the water collecting container, a tool receiving recess and a storage case to receive a toothbrush and toothpaste, and gargle cups. The infant mobile tooth-brushing basin allows infants to brush their teeth alone without assistance of a guardian regardless of a place and assists in forming a tooth-brushing habit by arousing curiosity and interest of infants.

## Description

### [Technical Field]

The present invention relates to an infant mobile tooth-brushing basin, which assists infants in forming a tooth-brushing habit with recreational factors thereof.

### [Background Art]

In consideration of impossible reproduction of teeth, it goes without saying that teeth management is important. First of all, forming a tooth-brushing habit from early childhood via thorough education is important for proper teeth management.

In the case of infants who have little concentration and are restless, playing is learning, and therefore a variety of playing instruments have been provided in many educational fields to arouse curiosity and interest and maximize learning effects. However, there is provided no playing instrument to form a tooth-brushing habit.

Infants are forced to brush their teeth only in a bathroom by their parents or a guardian. To say nothing of arousing curiosity and interest, this forcible tooth-brushing may create the animosity of infants, and education for forming a tooth-brushing habit cannot be expected.

Moreover, since a basin for a general domestic bathroom is installed at a relatively high height on the basis of the average height of adults, infants have difficulty in taking out a toothbrush and toothpaste by themselves and also, in gaining and discharging gargling water, and have no option but to passively depend on assistance of a guardian. This gives annoyance to a guardian and prevents active tooth-brushing, making it further difficult to form a tooth-brushing habit.

Korean Patent Laid-Open Publication No. 10-2008-0020884 discloses a bed gargling kit that assists tired persons, weak and elderly persons who are not able to move freely, and child to gargle on a bed other than a basin. However, except for the advantage in that gargling is possible in a desired place other than a bathroom, the above mentioned gargling kit enables only washing of the interior of a mouth with salt water and a gargle, such as a fluoride additive gargle, and does not enable use of a toothbrush that is the most effective means for tooth-brushing. Further, since gargling is realized via a simple motion of suctioning a gargle and spitting it after rinsing the mouth, and subsequently suctioning rinsing water and spitting it after rinsing the mouth, the gargling kit does not have factors of arousing curiosity and interest of infants. Furthermore, even if it succeeds in arousing curiosity and interest of infants, the gargling kit cannot assist in forming a tooth-brushing habit so long as it does not enable tooth-brushing.

### [Disclosure]

### [Technical Problem]

Therefore, the present invention has been made in view of the above problems, and it is an object of the present invention to provide an infant mobile tooth-brushing basin, which can assist infants in brushing their teeth using a toothbrush with curiosity and interest regardless of places without assistance of a guardian.

### [Technical Solution]

In accordance with an aspect of the present invention, the above and other objects can be accomplished by the provision of an infant mobile tooth-brushing basin including a main body, a height of which is determined based on a sitting height of infants, wherein a water supply container and a water collecting container are received in the main body, and a pumping device is mounted to the top of the main body to pump water contained in the water supply container to a cup placed on the main body, whereby tooth-brushing as well as gargling are possible using a variety of tooth-brushing tools received in a tool receiving recess indented in an upper surface of the main body and a toothbrush received in a storage case attached to the main body while a sound generator generates sound for a recommended tooth-brushing time, and a drain bowl is indented in the upper surface of the main body and a funnel is connected to the main body via a flexible pipe to enable discharge of water used upon tooth-brushing and the discharged water is collected into the water collecting container.

### [Advantageous Effects]

In an infant mobile tooth-brushing basin according to the present invention, a main body, which defines an external appearance of the basin and receives a water supply container and a water collecting container therein, has a height determined based on a sitting height of infants, and mounted on the top of the main body are a drain bowl, a pumping device to pump water in the water supply container, a water reservoir having a water supply tap, and one or more cups having different sizes. Also, a sound generator having a toy function is provided to generate sound favorable to infants. In this way, the infant mobile tooth-brushing basin can function as a water playing instrument or a toy to arouse curiosity and interest of infants, thereby allowing infants to feel an affinity for the tooth-brushing basin.

Further, in addition to the water supply container and the water collecting container, as a result of providing the main body with a tool receiving recess for receiving a variety of tooth-brushing tools, such as toothpaste, a towel and the like, and a storage case having a sterilizer for sanitary storage of a toothbrush received in the storage case, the infant mobile tooth-brushing basin independently enables infants to brush their teeth without requiring other auxiliary equipment, and can be freely moved to a desired place, such as a living room or a play room, to allow infants to brush their teeth at the desired place.

In particular, according to the present invention, arrangement of the respective components for tooth-brushing, an opening/closing operation of the storage case in which the toothbrush is received, the pumping device and the water supply tap that are used to acquire water used for tooth-brushing, the drain bowl and a funnel that are used to drain water used upon tooth-brushing, and the sound generator can arouse curiosity and interest of infants, which can assist infants in forming a tooth-brushing habit and in enjoying tooth-brushing without assistance of a guardian.

### [Description of Drawings]

The above and other objects, features and other advantages of the present invention will be more clearly understood from the following detailed description taken in conjunction with the accompanying drawings, in which:
FIG. 1 is a perspective view illustrating an infant mobile tooth-brushing basin according to the present invention;

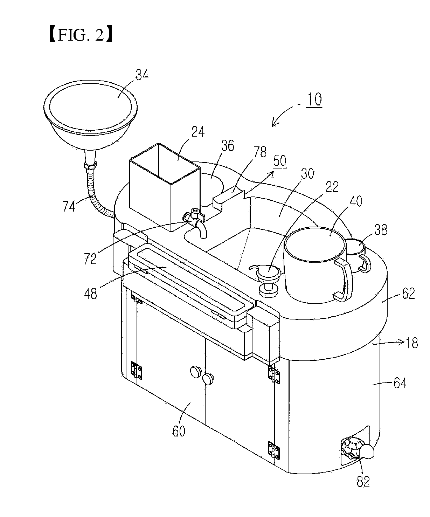

FIG. 2 is a rear perspective view of the infant mobile tooth-brushing basin according to the present invention;

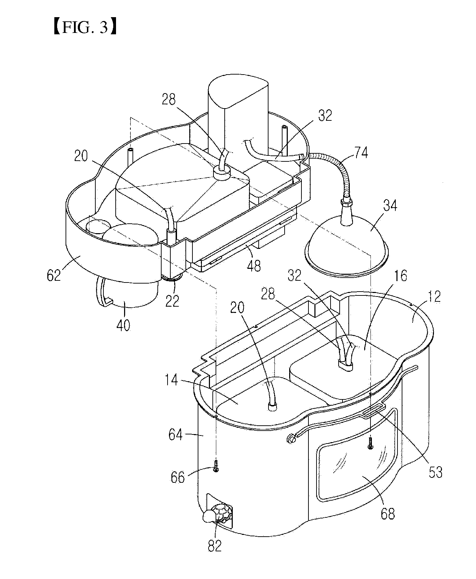

FIG. 3 is a partial exploded perspective view of the infant mobile tooth-brushing basin according to the present invention;
FIG. 4 is an exploded perspective view of the infant mobile tooth-brushing basin according to the present invention;
FIG. 5 is a plan sectional view illustrating a configuration of the infant mobile tooth-brushing basin according to the present invention; and

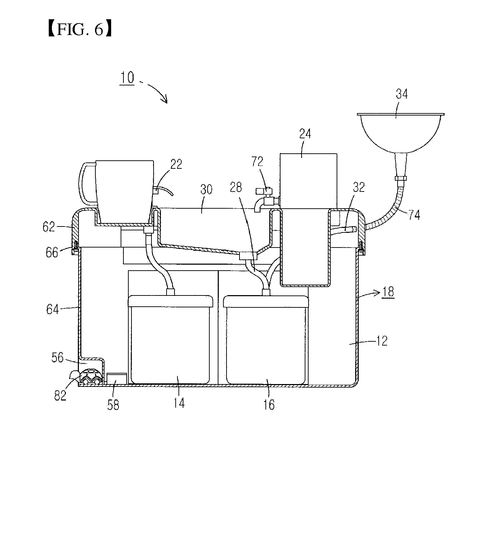

FIG. 6 is a front sectional view illustrating the configuration of the infant mobile tooth-brushing basin according to the present invention.

### [Best Mode]

Hereinafter, a preferred embodiment of the present invention will be described in detail with reference to the accompanying drawings. In the drawings, the same or similar elements are denoted by the same reference numerals even though they are depicted in different drawings. In the following description of the present invention, a detailed description of known functions and configurations incorporated herein will be omitted when it may make the subject matter of the present invention rather unclear.

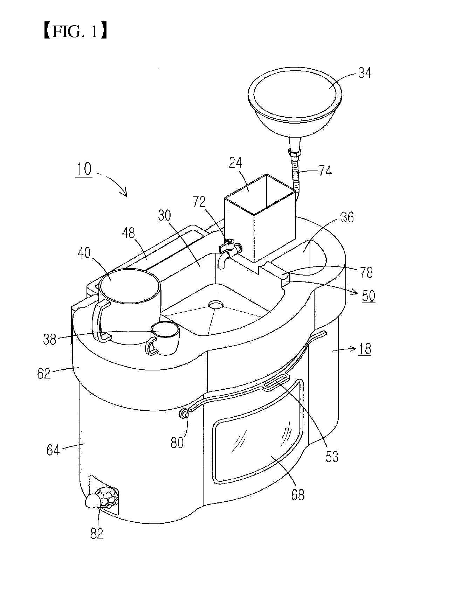

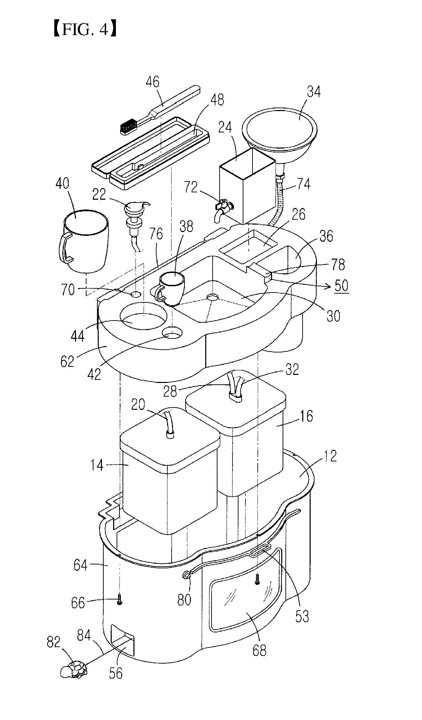

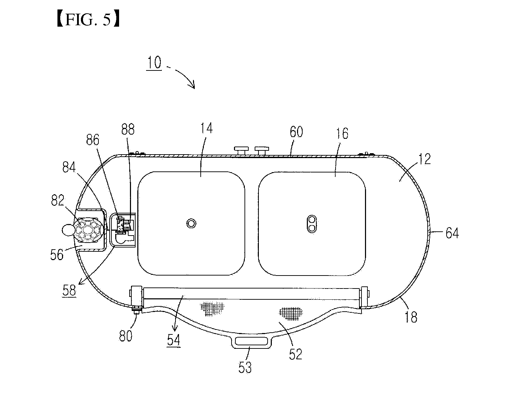

FIG. 1 is a perspective view illustrating an infant mobile tooth-brushing basin according to the present invention, FIG. 4 is an exploded perspective view of the infant mobile tooth-brushing basin according to the present invention, and FIG. 5 is a plan sectional view illustrating a configuration of the infant mobile tooth-brushing basin according to the present invention. The infant mobile tooth-brushing basin 10 according to the present invention includes a main body 18, which externally defines the outer appearance of the tooth-brushing basin 10 and internally defines an inner space 12 in which a water supply container 14 and a water collecting container 16 are received. Mounted on the main body 18 are a pumping device 22 connected to the water supply container 14 via a hose 20, a funnel 34 connected to the water collecting container 16 via a hose 32, and a storage case 48 in which a toothbrush 46 is stored. A plurality of recesses is indented in an upper surface of the main body 18. The recesses may include a coupling recess 26 for placement of a water reservoir 24, a tool receiving recess 36 in which a variety of tooth-brushing tools is received, coupling recesses 42 and 44 for placement of cups 38 and 40, and a support portion 50 to allow a user to temporarily lay down the toothbrush 46 during toothbrushing. A winding roller 54, on which a cover 52 is wound, is installed in a front region of the main body 18, and a sound generator 58 is inserted into the main body 18 through a chamber 56 indented in a lateral lower portion of the main body 18. Additionally, an opening/closing door 60 is installed to a rear surface of the main body 18 to allow introduction and discharge of the water supply container 14 and the water collecting container 16.

The main body 18 employed in the present invention is injection molded using synthetic resins to have an outer appearance and color suitable to stimulate curiosity of infants within a range in which the main body 18 can receive the water supply container 14, the water collecting container 16, the winding roller 54, and the like. The main body 18 is also configured such that the respective corners thereof are curved for the sake of safety.

To ensure easy separation from a mold during injection molding, the main body 18 may be divided into an upper body 62 and a lower body 64, and the upper body 62 and the lower body 64 may be integrally coupled to each other using clamp screws 66 or via an engagement protrusion and recess. The upper and lower bodies 62 and 64 may be integrally formed with each other via an improved structure or different materials. A transparent window 68 is provided at a front surface of the lower body 64, and serves to allow a user to identify the level of water in the water supply container 14 and the water collecting container 16 with the naked eye.

Meanwhile, the water supply container 14 and the water collecting container 16 received in the main body 18 serve to supply water for use in tooth-brushing and to collect used water after tooth-brushing, respectively. The water supply container 14 and the water collecting container 16 respectively have sufficient capacities to supply or collect the amount of water required for at least one or more tooth-brushing or the amount of water disposed after tooth-brushing. Lids are coupled to the water supply container 14 and the water collecting container 16 for the sake of hermetic sealing of the containers 14 and 16 and connection of the hoses 20, 28 and 32.

The pumping device 22 connected to the water supply container 14 is generally comprised of a housing, a chaplet coupled to an upper end of the housing, a piston installed in the housing, and a nozzle head coupled to an upper end of the piston, and is operated to pump water when the nozzle head is pushed. A further detailed description of the interior configuration of the pumping device 22 will be omitted herein. The housing of the pumping device 22 is fixedly inserted into an insertion hole 70 that is formed in a rear position of an upper surface of the upper body 62 of the main body 18. An end of the housing having passed through the insertion hole is connected to the water supply container 14 via the hose 20.

The coupling recess 26 for placement of the water reservoir 24 is indented in a lateral position of the upper surface of the upper body 62 of the main body 18 such that the water reservoir 24 can be stably seated in the coupling recess 26. In this case, the water reservoir 24 fitted into the coupling recess 26 serves as an additional water supply means except for the pumping device 22. Although the water reservoir 24 may be fabricated into a cup that is simply used to hold water therein, in order to arouse curiosity and interest of infants, a water supply tap 72 may be installed to a lateral lower portion of the water reservoir 24 to selectively supply water via an opening/closing operation thereof.

A drain bowl 30 having a relatively large size is indented in a central region of the upper surface of the upper body 62 of the main body 18 and is connected to the water collecting container 16. A water drain hole of the drain bowl 30 is connected to the hose 28 that is in turn connected to the water collecting container 16.

The funnel 34 is movably connected to a lateral surface of the upper body 62 of the main body 18 via a flexible pipe 74, and an end of the flexible pipe 74 is connected to the water collecting container 16 via the hose 32. The funnel 34 provides an additional discharge means for disposal of water used in tooth-brushing except for the drain bowl 30. Accordingly, providing the funnel 34 may allow two persons to simultaneously perform tooth-brushing, and also may arouse curiosity of infants. Even if two persons simultaneously perform tooth-brushing, there is no risk of interference between the two persons because the funnel 34 is freely movable.

The tool receiving recess 36 is indented aside the water reservoir 24 that is placed at the lateral position of the upper surface of the upper body 62 constituting the main body 18. The tool receiving recess 36 is configured to receive all of various necessary tooth-brushing tools, such as a toothbrush, toothpaste, a towel, and the like.

One or more coupling recesses 42 and 44 for placement of the cups 38 and 40 may be indented in the upper surface of the upper body 62 constituting the main body 18 at an opposite side of the water reservoir 24 and the tool receiving recess 36 for the sake of stable seating of the cups 38 and 40. In this case, the cups 38 and 40 seated in the coupling recesses 42 and 44 may have different sizes. In one example, the large cup 40 may hold a great amount of water required for tooth-brushing such that the water is fed into the small cup 38 little by little. In another example, the two cups may be differentially used for persons in different age groups, or may allow simultaneous use of two persons.

The storage case 48 configured to store the toothbrush 46 is fitted into a fixing groove 76 that is formed at a rear end of the upper surface of the upper body 62 constituting the main body 18. The storage case 48 contains a sterilizer therein to enable more sanitary management of the toothbrush 46.

The support portion 50 is used to allow a user to temporarily lay down the toothbrush 46 being used when it is desired for the user to pick up the cup 38 or perform other hand motions during tooth-brushing. The support portion 50 may protrude from a margin of the upper surface of the upper body 62 constituting the main body 18 and may have a concave upper surface to stably support an object, such as the toothbrush 46, placed thereon.

The winding roller 54 and the cover 52 take the form of a general roll screen, in which a spring (not shown) is provided to apply elastic force in a winding direction of the cover 52, and a locking piece (not shown) is provided to keep the cover 52 in an outwardly pulled state. Accordingly, if the locking piece is released when a button 80 is pushed, winding of the cover 52 is initiated under assistance of elastic force. The winding roller 54 and the cover 52 are located in the front region of the lower body 64 so as not to interfere with the water supply container 14 and the water collecting container 16. A further detailed description of other configurations of the winding roller 54 will be omitted herein. The cover 52 is formed of a waterproof fabric, and a handle 53 is provided at an end of the cover 52 so as to be exposed to the outside through an elongated guide slot formed in the front surface of the lower body 64.

However, it will be understood that the winding roller 54 is not limited as having the above described automatic winding means, and the handle may be provided at the winding roller 54 such that winding of the cover 52 is realized via rotation of the handle.

The sound generator 58 serves to inform a user of a tooth-brushing time by generating a variety of sounds, such as a children's song, and the like, for a recommended tooth-brushing time. The sound generator 58 can generate sound for a given time, and may be mounted at a position convenient for use. In addition to generating sound, the sound generator 58 may further function as a toy to arouse curiosity and interest of infants. The sound generator 58 having the toy function may be mounted in the chamber 56 indented in a lateral lower portion of the lower body 64 of the main body 18 in consideration of, e.g., the kind or volume thereof.

More specifically, the sound generator 58, as shown in FIG. 5, includes a rotator 86, about which a rope 84, to which a movable object 82, such as for example, a turtle toy is connected, is wound, and a sensor 88 adapted to come into contact with any one of bosses provided at an outer surface of the rotator 86 according to sound to be generated. With this configuration, if the movable object 82 is moved to pull out the rope 84, the sound generator 58 can serve as a general toy to generate sound for a time during the rope 84 is again wound about the rotator 86. In this way, it is possible to generate sound for a desired time by adjusting the length of the rope 84, and to arouse curiosity and interest of infants via movement of the movable object 82 during generation of sound.

The infant mobile tooth-brushing basin 10 according to the present invention has a small volume and may be used as an indoor water-playing toy or an infant tooth-brushing kit.

In summary, according to the present invention, water can be supplied into the drain bowl 30 via a pumping operation of the pumping device 22 and an opening/closing operation of the water supply tap 72 provided at the water reservoir 24. Accordingly, an infant can perform a water-playing game for injecting water into, e.g., a water gun or water balloon, or for washing toys. If the water used for water playing is drained from the drain bowl 30 or the funnel 34, the water is collected into the water collecting container 16 by gravity. In this way, the infant mobile tooth-brushing basin 10 according to the present invention can sufficiently satisfy functions as a toy, such as generation of sound by the sound generator 58 and movement of the movable object 82.

Further, in the infant mobile tooth-brushing basin 10 according to the present invention, a variety of tooth-brushing tools, such as a toothbrush, toothpaste and the like, can be received in the tool receiving recess 36 and the storage case 48, the amount of water required for at least one tooth-brushing can be supplied into the water supply container 14, and the water used upon tooth-brushing can be collected in the water collecting container 16. That is, the infant mobile tooth-brushing basin 10 can independently realize provision of tooth-brushing tools and implementation of all tooth-brushing behaviors. Moreover, the infant mobile tooth-brushing basin 10 is light and can be freely moved to a desired place, such as a living room or a play room, to enable infants to brush their teeth at a desired place.

A height of the main body 18 is determined based on a sitting height of infants, which allows infants to brush their teeth alone without assistance of a guardian.

During tooth-brushing, the cover 52 is unwound from the winding roller 54 so as to be pulled out from the main body 18, which enables implementation of tooth-brushing without contaminating clothes or the surroundings. After use of the cover 52, the cover 52 can be automatically wound as the button 80 is pushed to release the locking piece from the winding roller 54, which ensures convenience and clean use of the cover 52.

Furthermore, during tooth-brushing, the sound generator 58 is operated to inform of a tooth-brushing time by generating a children's song favorable to infants. In addition, as sound is generated while the pulled rope 84 is wound and the movable object 82 is moved during generation of sound, it is possible to arouse curiosity and interest of infants and to assist infants in more actively brushing their teeth.

In particular, for example, the pumping operation by the pumping device 22 or the opening/closing operation by the water supply tap 72 of the water reservoir 24 for acquiring water required for tooth-brushing as well as the operation of spitting water used upon tooth-brushing through the drain bowl 30 or the funnel 34 connected to the flexible pipe 74 can further stimulate curiosity of infants and arouse interest, which assists infants in more actively brushing their teeth and forming a tooth-brushing habit.

In the infant mobile tooth-brushing basin 10 according to the present invention, the two cups 38 and 40 are provided, water can be supplied through both the pumping device 22 and the water reservoir 24, and water used upon tooth-brushing can be drained through both the drain bowl 30 and the funnel 34. Accordingly, two persons can simultaneously brush their teeth without interference.

Although the infant mobile tooth-brushing basin according to the preferred embodiment of the present invention has been disclosed for illustrative purposes, those skilled in the art will appreciate that the present invention may be applied to a mobile tooth-brushing basin for weak and elderly persons and patients who are not able to move freely, and various modifications, additions and substitutions are possible, without departing from the scope and spirit of the invention as disclosed in the accompanying claims.

### [Mode for Invention]

As described above, related items have sufficiently been discussed in the above "Best Mode".

### [Industrial Applicability]

As described above, the present invention may be wholly or partially applied to a mobile dental hygiene basin.

## Claims

1. An infant mobile tooth-brushing basin comprising:
a main body having an inner space;
a water supply container and a water collecting container received in the space of the main body;
a pumping device mounted on the top of the main body and connected to the water supply container via a hose;
a drain bowl indented in an upper surface of the main body and having a drain hole connected to the water collecting container via a hose; and
a tool receiving recess indented in the upper surface of the main body aside the drain bowl to receive a variety of tooth-brushing tools.

2. The infant mobile tooth-brushing basin according to claim 1,
wherein a funnel is connected to the top of the main body via a flexible pipe, and the flexible pipe is connected to the water collecting container via a hose.

3. The infant mobile tooth-brushing basin according to claim 1,
wherein an opening/closing door is provided at a rear surface of the main body for introduction of the water supply container and the water collecting container into the main body.

4. The infant mobile tooth-brushing basin according to claim 1,
wherein coupling recesses for placement of one or more cups are indented in the upper surface of the main body.

5. The infant mobile tooth-brushing basin according to claim 1,
wherein a coupling recess for placement of a water reservoir having a water supply tap is indented in the upper surface of the main body.

6. The infant mobile tooth-brushing basin according to claim 1,
wherein a sound generator to generate sound for a given time is mounted to the main body.

7. The infant mobile tooth-brushing basin according to claim 1,
wherein a winding roller, on which a cover having a handle is wound, is installed in a front region of the main body so as not to interfere with the water supply container and the water collecting container, and the handle provided at the cover is exposed to the outside through an elongated slot of the main body.

8. The infant mobile tooth-brushing basin according to claim 1,
wherein a storage case in which a toothbrush is stored is attached to the top of the main body.
